# EUROPÄISCHE PATENTANMELDUNG

(11) **EP 1 353 136 A2**
(43) Veröffentlichungstag der Anmeldung: **15.10.2003**
(21) Anmeldenummer: 03007810.9
(22) Anmeldetag: 04.04.2003
(51) Int. Cl.: F25D 25/04, B65G 45/22

(54) **Vorrichtung zum Reinigen eines Spiralfrosters**

(30) Priorität: 08.04.2002 DE 10215372
(71) Anmelder: Linde Aktiengesellschaft, 65189 Wiesbaden (DE)
(72) Erfinder: Kamm, Volker, 82024 Taufkirchen (DE)
(74) Vertreter: Kasseckert, Rainer

(57) **Zusammenfassung**

Die Erfindung betrifft eine Vorrichtung zum Reinigen eines Spiralfrosters (1) zum Abkühlen von Lebensmitteln oder Pharmazeutika mit einer Reinigungseinheit (4), einem wendelförmig angeordnetem Transportband (2) und einer inneren Bandführung (5), die Rotunde (5) genannt wird und eine Rotundenwelle (6) aufweist, dadurch gekennzeichnet, dass die Reinigungseinheit (4) mit der Rotunde (5) verbunden ist und über eine Drehdurchführung durch die Rotundenwelle (6) mit einer Quelle für ein Reinigungsmedium in Verbindung steht.

## Beschreibung

Die Erfindung betrifft eine Vorrichtung zum Reinigen eines Spiralfrosters zum Abkühlen von Lebensmitteln oder Pharmazeutika mit einer Reinigungseinheit, einem wendelförmig angeordnetem Transportband und einer inneren Bandführung, die Rotunde genannt wird und eine Rotundenwelle aufweist.

Bekannt ist es, Anlagen zur Herstellung und/oder Bearbeitung von Lebensmitteln oder Pharmazeutika, also Anlagen mit hohen hygienischen Anforderungen, in Betriebspausen manuell zu reinigen. Dabei treten jedoch meist Probleme auf, da derartige Anlagen typischerweise für das Reinigungspersonal nur schwer zugänglich sind und eine Vielzahl von Einbauten auf engem Raum aufweisen. Darüber hinaus hängt die Qualität der Reinigung vor allem von der Sorgfalt des Personals ab und ist damit unerwünschten Schwankungen unterworfen.

Bekannt sind außerdem verschiedene automatisierte Reinigungssysteme, beispielsweise in der Anlage fest installierte Düsen, die ein Reinigungsmittel in der Anlage versprühen. Bei diesen Systemen ist jedoch darauf zu achten, inwieweit sie in der Lage sind alle Ecken und Winkel in der Anlage zu reinigen. In der Regel gibt es sogenannte Reinigungsschatten, worunter man Bereiche versteht, die bei der Reinigung nicht erreicht werden. Um solche Bereiche zu eliminieren bedarf es einer großen Zahl an Düsen und Zuleitungen für Reinigungsmittel, wodurch ein komplexes und aufwändig zu wartendes System entsteht. Darüber hinaus darf bei fest eingebauten Systemen die Reinigung der Oberflächen des Reinigungsystems nicht vernachlässigt werden, da das Reinigunsystem als Teil der Anlage betrachtet werden muß und daher ebenfalls den hohen Hygieneanforderungen unterliegt.

Der Erfindung liegt daher die Aufgabe zugrunde, ein einfaches und wartungsfreundliches Reinigungssystem zur Verfügung zu stellen, das auch hohe Hygieneanforderungen erfüllt, wie sie beispielsweise bei der Herstellung und/oder Bearbeitung von Lebensmitteln oder Pharmazeutika gestellt werden.

Die gestellte Aufgabe wird dadurch gelöst, dass die Reinigungseinheit mit der Rotunde verbunden ist und über eine Drehdurchführung durch die Rotundenwelle mit einer Quelle für Reinigungsmedium in Verbindung steht.

Unter dem Begriff Reinigungsmedium sind hierbei alle Mittel zu verstehen denen ein reinigender Effekt zugeschrieben werden kann, insbesondere Wasser, Wasser-Waschmittel-Mischungen oder -lösungen, Schaum, Gel und auch Gase sowie Gasmischungen (z. B. Luft). Der genannte Schaum wird in der Regel aus Wasser und Waschmittel unter Zugabe von Gas (z. B. Stickstoff, Luft) erzeugt.

Der Begriff Abkühlen beschreibt einerseits die Abkühlung auf Temperaturen oberhalb des Gefrierpunktes, beispielsweise die Abkühlung wärmebehandelter Lebensmittel von +70 °C auf +10 °C. Abkühlen umfaßt aber insbesondere auch gefrieren und tiefgefrieren. Tiefgefrieren (frosten) bedeutet, dass die Lebensmittel für einen ausreichenden Zeitraum einem Kältemedium ausreichend niedriger Temperatur ausgesetzt sind, so dass im Anschluß an den Gefriervorgang eine Kerntemperatur deutlich unterhalb des Gefrierpunktes von Wasser vorliegt, in der Regel unterhalb einer Temperatur von -18 °C.

Das Kältemedium kann z. B. tiefkaltes Gas (verflüssigt oder gasförmig) oder abgekühlte Luft sein. Der Wärmetausch findet dabei in der Regel im Wesentlichen über konvektive Prozesse statt, beim Einsatz von verflüssigtem Gas auch über Wärmeleitung durch direkten Kontakt des Kühlmediums mit dem abzukühlenden Produkt.

Bevorzugt ist die Reinigungseinheit mit der Rotunde starr verbunden. Dadurch wird die Drehbewegung der Rotunde auf die Reinigungseinheit übertragen. Die Reinigungseinheit wird gleichförmig und synchron mit der Rotundenbewegung durch den Spiralfroster bewegt, wodurch die Reinigungseinheit alle Bereiche des Spiralfrosters vorteilhaft zur Reinigung erreichen kann.

Besonders bevorzugt weist die Reinigungseinheit mindestens einen Reinigungskopf zur Abgabe von Reinigungsmittel und ein Verbindungsstück auf, welches den Reinigungskopf mit der Rotunde verbindet. Vorteilhaft ist diese Verbindung starr ausgeführt. Es kann aber gemäß einer anderen Ausführungsform der Erfindung auch von Vorteil sein, diese Verbindung nicht starr auszuführen, sondern eine abkoppelbare Verbindung vorzusehen, so dass die Reinigungseinheit nur während der Reinigung mit der Rotundendrehung gekoppelt ist. Zum normalen Betrieb des Spiralfrosters kann bei dieser Ausführungsform die Reinigungseinheit von der Bewegung der Rotunde entkoppelt werden. Dadurch entsteht jedoch ein etwas höhere Aufwand für mechanische Komponenten zur Kopplung und Entkopplung. Eine weitere Ausführungsform der Erfindung sieht vor, dass die Reinigungseinheit einen eigenen Antrieb erhält, wodurch sie keine Kopplung mit der Rotunde benötigt, wozu jedoch ein höhere konstruktiver Aufwand erforderlich ist. Welche dieser Ausführungsformen im Einzelfall zu bevorzugen ist, hängt im Wesentichen von konstruktiven Vorgaben, z. B. den Platzverhältnissen im Spiralfroster, und der Reinigungshäufigkeit ab.

Mit besonderem Vorteil ist das Verbindungsstück so dimensioniert, dass der Reinigungskopf über dem äußeren Rand des Transportbandes lokalisiert ist. Dadurch wird bei einem üblicherweise leicht in Richtung auf die Rotunde, also nach innen, geneigten Transportband eine Reinigung der gesamten Oberfläche des Transportbandes gewährleistet.

Das Reinigungsmedium erreicht jedoch erfindungsgemäß auch alle anderen Bereiche des Innenraums des Spiralfrosters. Zur vollständigen Entfernung aller Verunreinigungen wird darüber hinaus ein leicht zur Mitte hin geneigter Boden des Spiralfrosters bevorzugt, wodurch das Reinigungsmittel zur Mitte hin abfließt und dadurch den Boden gründlich reinigt und alle nach unten gespülten Rückstände und Verunreinigungen entfernt.

Gemäß einer weiteren vorteilhaften Ausgestaltung der Erfindung wird ein in einer weiteren Richtung zusätzlich zu der Kreisbewegung, die der Reinigungskopf zumindest während der Reinigung ausführt, bewegbarer Reinigungskopf eingesetzt.
Beispielsweise ist der Reinigungskopf zusätzlich in radialer Richtung schwenkbar ausgeführt oder die Reinigungseinheit weist mit besonderem Vorteil einen Reinigungskopf auf, der eine durch die Strömung des Reinigungsmittels angetriebene Rotationsbewegung ausführt. Durch die Rotationsbewegung wird vorteilhaft eine Winkelabdeckung von 360° erreicht. Alternativ sind beispielsweise auch in mehreren Richtungen schwenkbare Düsenköpfe einsetzbar.

Zweckmäßigerweise ist eine für die Durchleitung von Reinigungsmittel eine zur Durchleitung von Flüssigkeit geeignete Welle als Rotundenwelle vorgesehen. Das Reinigungsmittel strömt dabei durch das Innere der Welle, die vorteilhaft als Hohlkörper ausgebildet ist.

In einer vorteilhaften Weiterbildung der Erfindung weist der Reinigungskopf mindestens eine Düse zur Abgabe von Reinigungsmedium auf. Besonders vorteilhaft enthält der Reinigungskopf mehrere Düsen, die das Reinigungsmedium in verschiedene Raumrichtungen abgeben. Dadurch kann auf konstruktiv einfache Weise eine gute Abdeckung aller Raumrichtungen und somit eine gleichmäßige Verteilung des Reinigungsmediums im Spiralfroster erreicht werden.

In einer weiteren vorteilhaften Ausgestaltung der Erfindung, weist der Reinigungskopf genau eine Düse zur Abgabe von Reinigungsmedium auf, insbesondere eine durch die Strömung des Reinigungsmediums angetriebene Düse, die eine Rotationsbewegung ausführt.

Durch die Bewegung der Reinigungseinheit können Reinigungsschatten vermieden werden. Theoretisch betrachtet entsteht durch die Bewegung der Reinigungseinheit eine vorteilhafte Wirkung wie sie von einer gegen unendlich gehenden Anzahl von nebeneinander installierten Reinigungsdüsen erreicht werden würde. Bei geeigneter Wahl des Reinigungskopfes, beispielsweise bei einem rotierenden Reinigungskopf mit mehreren in verschiedenen Winkeln zur Rotationsachse angeordneten Düsen, ist eine sehr gründliche Reinigung ohne Reinigungsschatten problemlos erreichbar. Dabei ist auch die Reinigungseinheit selbst, sowie das Führungssystem mit umfasst, d.h. auch diese Komponenten werden mit der erfindungsgemäßen Vorrichtung automatisch gründlich gereinigt.

Die Investitionskosten für die Reinigungskomponenten erhöhen sich im Gegensatz zu herkömmlichen, fest montierten Reinigungssystemen nur unwesentlich für große Anlagen, da die bewegbare Reinigungseinheit unabhängig von der räumlichen Ausdehnung der zu reinigenden Anlage im Preis gleich bleibt. Insgesamt ergeben sich gegenüber den herkömmlichen Reinigungssystemen deutlich reduzierte Investitionskosten.

Die erfindungsgemäße Vorrichtung weist im Betrieb einen vorteilhaft geringen Bedarf an Betriebsmittel wie beispielsweise Wasser und Waschmittel bei gleichzeitig hervorragendem Reinigungsergebnis auf.

Die Erfindung sowie weitere Einzelheiten der Erfindung werden im Folgenden anhand eines in den Figuren dargestellten Ausführungsbeispiels näher erläutert. Hierbei zeigen
- Figur 1: einen Querschnitt durch einen Spiralfroster mit einer erfindungsgemäßen Reinigungseinheit
- Figur 2: eine Draufsicht auf das Innere einer solchen Anlage.

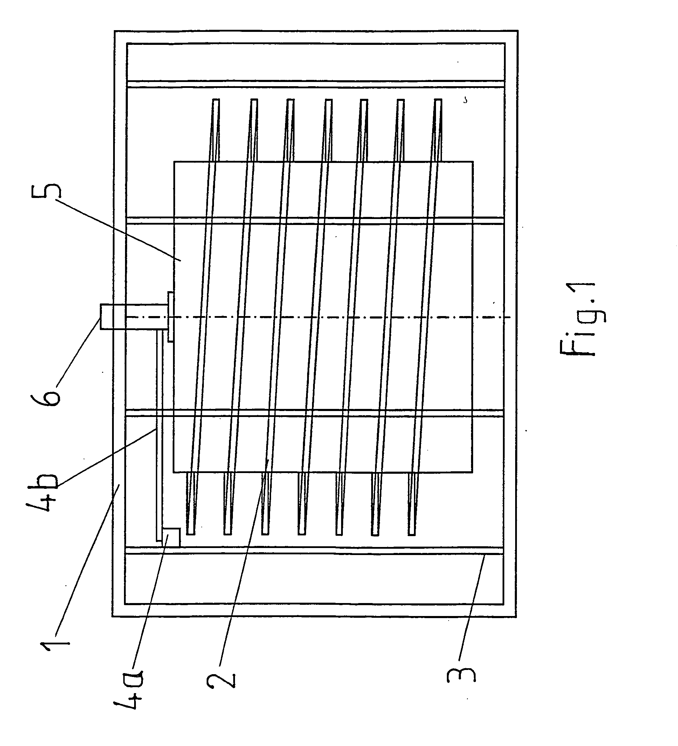

Im Einzelnen zeigt Figur 1 einen Spiralfroster 1 zum Gefrieren von Lebensmitteln mit einer erfindungsgemäßen Reinigungseinheit 4, die einen Reinigungskopf 4a und eine starre Verbindung 4b zur Rotunde 5 aufweist. Der Spiralfroster 1 weist ein Förderband 2 auf, auf dem im Gefrierbetrieb die Lebensmittel transportiert werden und auf dem daher die höchste Verunreinigung auftritt.

Die Reinigungseinheit 4 ist mit der Rotunde 5 starr verbunden und dreht sich daher mit der Rotunde 5 mit. Diese Drehbewegung führt die Reinigungseinheit immer aus, auch während des normalen Frosterbetriebs ohne Reinigung. Die Bezugsziffer 3 bezeichnet die vertikalen Stützen 3 des Spiralfrosters 1 innerhalb derer die Reinigungseinheit 4 bewegt wird. Zur Reinigung das Spiralfrosters 1 wird über die Rotunde 5 mit Hilfe einer Drehdurchführung durch die Rotundenwelle 6 ein Reinigungsmedium wie z. B. ein Wasser-Reinigungsmittel-Gemisch zugeführt. Bei der gezeigten Anordnung werden vorteilhaft die Stützen 3 automatisch mitgereinigt.

Der Reinigungskopf 4a ist beispielsweise als drehbarer Reinigungskopf 4a ausgeführt, der durch die Strömung des durch das Innere der Rotundenwelle 6 zugeführten Reinigungsmediums in eine Rotationsbewegung versetzt wird. Die Drehdurchführung im Inneren der Rotundenwelle 6 ist zumindest im Reinigungsbetrieb mit einer Quelle für Reinigungsmedium (nicht dargestellt) verbunden.

Zur Reinigung der Anlage (Reinigungsbetrieb) wird die Reinigungseinheit 4 mindestens für die Dauer einer ganzen Umdrehung der Rotunde 5 in Betrieb genommen, wobei das Reinigungsmedium aus dem Reinigungskopf 4a austritt und das Innere der Anlage von Verunreinigungen befreit. Durch die Rotationsbewegung wird vorteilhaft ein Winkelabdeckung von 360° erreicht. Der Reinigungskopf 4a ist vorteilhaft mit mehreren in verschiedenen Winkeln zur Rotationsachse angeordneten Düsen versehen, wodurch eine gründliche Reinigung ohne Reinigungsschatten ermöglicht wird. Dies wird besonders durch die Anordnung der Reinigungseinheit 4 an der höchsten Stelle oberhalb des höchsten Punktes des Transportbandes erreicht.

Aufgrund der in den beiden Figuren dargestellten Anordnung der Komponenten zueinander, wird die Reinigungseinheit 4 gleichzeitig mit der Reinigung der Anlage ebenfalls gereinigt. Dies wird zum Beispiel durch zumindest zum Teil nach oben gerichtete Düsen des Reinigungskopfes erreicht.

Nach Abschluss der Reinigung und während des Abkühlbetriebs in der Anlage verbleibt die Reinigungseinheit 4 in ihrer Position und wird mit der Bewegung der Rotunde 5 ebenfalls bewegt. Ein zeitaufwändiges Entfernen irgendwelcher Reinigungskomponenten beim Übergang von Reinigungsbetrieb zum Abkühlbetrieb ist nicht erforderlich.

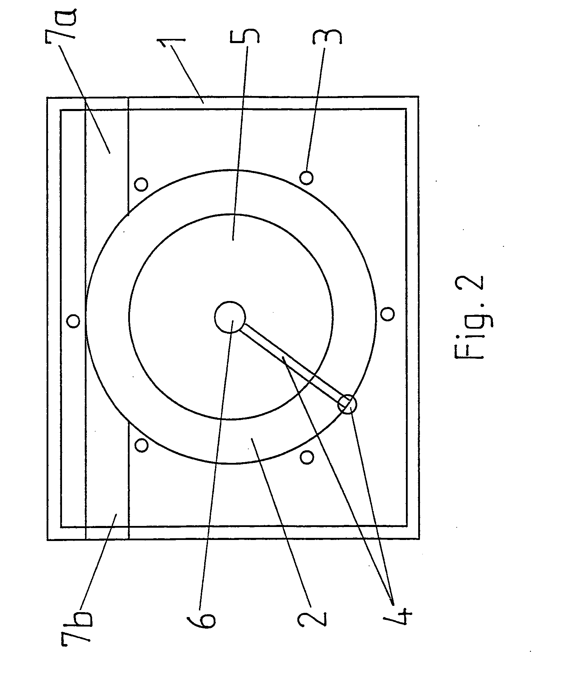

Die Figur 2 zeigt im Einzelnen eine Draufsicht auf das Innere des beschriebenen Spiralfrosters 1 mit der Reinigungseinheit 4. Die gezeigten Komponenten tragen die aus der Figur 1 bekannten Bezugszeichen. Darüber hinaus ist ein Eingabebereich 7a und Ausgabebereich 7b gezeigt, in dem die abzukühlenden Lebensmittel auf das endlose Transportband 2 des Spiralfrosters 1 aufgegeben bzw. ausgegeben werden.

Es ist im Hinblick auf die Hygieneanforderungen im Inneren der Anlage von Vorteil, dass die Reinigungseinheit aus wenigen Teilen besteht, die insgesamt sehr wenig Platz im Inneren des Spiralfrosters beanspruchen. Durch das erfindungsgemäße permanente Verbleiben der Reinigungseinheit im Spiralfroster wird ein Eintrag von Verunreinigungen mit einem andernfalls nötigen Einbringen der Reinigungseinheit in den Spiralfroster zuverlässig vermieden.

Die Erfindung ist darüber hinaus auch in anderen zu reinigenden Anlagen mit im wesentlichen rundem Querschnitt vorteilhaft einsetzbar.

## Patentansprüche

1. Vorrichtung zum Reinigen eines Spiralfrosters (1) zum Abkühlen von Lebensmitteln oder Pharmazeutika mit einer Reinigungseinheit (4), einem wendelförmig angeordnetem Transportband (2) und einer inneren Bandführung (5), die Rotunde (5) genannt wird und eine Rotundenwelle (6) aufweist, **dadurch gekennzeichnet, dass** die Reinigungseinheit (4) mit der Rotunde (5) verbunden ist und über eine Drehdurchführung durch die Rotundenwelle (6) mit einer Quelle für ein Reinigungsmedium in Verbindung steht.

2. Vorrichtung nach Anspruch 1, **dadurch gekennzeichnet, dass** die Reinigungseinheit (4) mit der Rotunde (5) starr verbunden ist.

3. Vorrichtung nach Anspruch 1 oder 2, **dadurch gekennzeichnet, dass** die Reinigungseinheit (4) mindestens einen Reinigungskopf (4a) und ein Verbindungsstück (4b) aufweist, welches den Reinigungskopf (4a) mit der Rotunde (5) verbindet.

4. Vorrichtung nach Anspruch 3, **dadurch gekennzeichnet, dass** das Verbindungsstück (4b) so dimensioniert ist, dass der Reinigungskopf (4a) über dem äußeren Rand des Transportbandes (2) lokalisiert ist.

5. Vorrichtung nach einem der Ansprüche 1 bis 4, **dadurch gekennzeichnet, dass** als Rotundenwelle (6) eine zur Durchleitung von Flüssigkeit geeignete Welle (6) vorgesehen ist.

6. Vorrichtung nach einem der Ansprüche 3 bis 5, **dadurch gekennzeichnet, dass** der Reinigungskopf (4a) mindestens eine Düse zur Abgabe von Reinigungsmedium aufweist.

7. Vorrichtung nach einem der Ansprüche 3 bis 5, **dadurch gekennzeichnet, dass** der Reinigungskopf (4a) genau eine Düse zur Abgabe von Reinigungsmedium aufweist, insbesondere eine durch die Strömung des Reinigungsmediums angetriebene Düse, die eine Rotationsbewegung ausführt.
